# EUROPÄISCHE PATENTSCHRIFT

(11) **EP 2 887 508 B1**
(45) Veröffentlichungstag und Bekanntmachung des Hinweises auf die Patenterteilung: **01.08.2018**
(21) Anmeldenummer: 14195351.3
(22) Anmeldetag: 28.11.2014
(51) Int. Cl.: H02K 5/15

(54) **Elektromotor, insbesondere Startermotor für eine Startvorrichtung**
Electric motor, in particular a starter motor for a starting device
Moteur électrique, en particulier moteur de démarrage pour un dispositif de démarrage

(30) Priorität: 06.12.2013 DE 102013225165
(43) Veröffentlichungstag der Anmeldung: 24.06.2015
(73) Patentinhaber: SEG Automotive Germany GmbH, 70499 Stuttgart (DE)
(72) Erfinder: Maier, Uwe, 75233 Tiefenbronn (DE); Gottschling, Juergen, 71732 Tamm (DE); Dilling, Gerald, 74385 Pleidelsheim (DE)
(74) Vertreter: Steinbauer, Florian

(56) Entgegenhaltungen:
- WO-A2-2010/149525
- WO-A2-2011/027033
- FR-A7- 2 417 242
- JP-A- S5 759 447
- JP-A- H07 312 834
- JP-U- S6 366 066
- US-A- 2 685 658

## Beschreibung

Die Erfindung bezieht sich auf einen Elektromotor, insbesondere einen Startermotor für eine Startervorrichtung nach dem Oberbegriff des Anspruches 1.

### Stand der Technik

In der DE 10 2009 027 117 A1 wird eine Startvorrichtung für eine Brennkraftmaschine beschrieben, bei der ein Starterritzel axial zwischen einer Außerfunktionsposition und einer Eingriffsposition mit einem Zahnkranz der Brennkraftmaschine verstellbar ist. Die axiale Verstellbewegung wird mithilfe eines elektromagnetischen Starterrelais erzeugt, dessen Hubanker über einen Stellhebel mit dem Starterritzel verbunden ist. Nach dem Einspuren des Starterritzels in den Zahnkranz der Brennkraftmaschine wird das Starterritzel über einen elektrischen Startermotor in Drehung versetzt, dessen Motorwelle über ein Planetengetriebe mit einer Antriebswelle verbunden ist, die das Starterritzel antreibt.

Das Motorgehäuse des Startermotors ist als ein Polrohr ausgeführt, das auf der dem Starterritzel abgewandten Seite von einem Lagerdeckel verschlossen ist, welcher eine Kommutierungseinrichtung zur Stromübertragung und -wendung auf Ankerwicklungen des Ankers übergreift. Zugleich nimmt der Lagerdeckel ein Lager für die Motor- bzw. Ankerwelle des Startermotors auf. Der Lagerdeckel ist mithilfe von Schrauben, die an der Außenseite des Polrohres entlanggeführt sind, mit einem Gehäuse der Startvorrichtung verbunden. Hierbei ist auf einen dichten Abschluss zwischen dem Lagerdeckel und dem Polrohr des Startermotors zu achten.

Aus der JP S57-059447 A1 ist ein Motor bekannt, dessen Lagerdeckel durch Strukturen so ausgebildet ist, dass Schwingungen im Lagerdeckel reduziert sind.

### Offenbarung der Erfindung

Der Erfindung liegt die Aufgabe zu Grunde, mit einfachen konstruktiven Maßnahmen das Gehäuse eines Elektromotors dicht auszubilden.

Diese Aufgabe wird erfindungsgemäß mit den Merkmalen des Anspruches 1 gelöst. Die Unteransprüche geben zweckmäßige Weiterbildungen an.

Der erfindungsgemäße Elektromotor weist ein Motorgehäuse auf, das üblicherweise Teil des Stators ist und stirnseitig von einem Lagerdeckel abgedeckt ist. Der Lagerdeckel nimmt ein Lager für die drehbare Lagerung der Ankerwelle des Elektromotors auf. Der Lagerdeckel ist über Schrauben oder Zuganker befestigt, die in Achsrichtung - bezogen auf die Motorlängsachse - eine Kraft zwischen Lagerdeckel und Motorgehäuse ausüben. Über die Schrauben ist der Lagerdeckel direkt oder indirekt axial am Motorgehäuse gehalten. Die Kraft, welche von den Schrauben auf den Lagerdeckel axial ausgeübt wird, sichert somit den Lagerdeckel am Motorgehäuse und sorgt für eine dichte Verbindung zwischen dem Lagerdeckel und der Stirnseite des Motorgehäuses.

Durch die Kraft der Schraubverbindung kann sich der Lagerdeckel verformen, was im Stand der Technik zu einem unerwünschten Luftspalt im Kontaktbereich zwischen dem Lagerdeckel und dem Motorgehäuse führt. Um einen derartigen Luftspalt zu vermeiden, ist es bei der erfindungsgemäßen Ausführung vorgesehen, dass der Kontaktbereich zwischen Lagerdeckel und Stirnseite des Motorgehäuses in dem zwischen den Schrauben liegenden Abschnitt eine ballig bzw. gekrümmt ausgeführte, axiale Erhöhung besitzt. Die axiale Erhöhung im Kontaktbereich zwischen den Schrauben kompensiert eine axiale Verformung des Lagerdeckels, die mit zunehmender Schraubkraft auftritt. Hierbei wird das Material des Lagerdeckels im unmittelbar den Schrauben benachbarten Bereich axial in Richtung auf das Motorgehäuse gezogen, wodurch sich die Abschnitte des Lagerdeckels im zwischen den Schrauben liegenden Bereich durch Verformung axial von der Stirnseite des Motorgehäuses abheben können. Zur Kompensation des hierbei entstehenden Spaltes dient die axial ballige Erhöhung, welche den Spalt zwischen dem Lagerdeckel und der Stirnseite des Motorgehäuses ausgleicht. Die Verformung des Lagerdeckels beim Anschrauben wird somit über die axial erhöhte Ausführung des Kontaktbereichs kompensiert.

Gemäß einer bevorzugten Ausführung ist die Kontaktfläche am Lagerdeckel axial erhöht und ballig ausgeführt, wohingegen die Stirnfläche des Motorgehäuses ohne derartige Erhöhung ausgeführt ist und stattdessen in einer Ebene liegt, die orthogonal zur Längsachse des Elektromotors gerichtet ist. In Betracht kommen aber auch Ausführungen, bei denen entweder nur die axiale Stirnseite des Motorgehäuses abschnittsweise axial erhöht ausgeführt ist, um die Verformung des Lagerdeckels beim Anschrauben zu kompensieren, oder sowohl die axiale Stirnseite des Motorgehäuses als auch der Lagerdeckel jeweils im Abschnitt zwischen den Schrauben eine axiale Erhöhung aufweisen.

In den Lagerdeckel können Schraubendurchtrittsöffnungen eingebracht sein, welche zur Aufnahme der Schrauben dienen. Die ballige axiale Erhöhung befindet sich an der Kontaktfläche des Lagerdeckels im zwischenliegenden Bereich zwischen Schraubendurchtrittsöffnungen.

Grundsätzlich genügt es, zwei diametral gegenüberliegend angeordnete Schrauben oder Zuganker für die Fixierung des Lagerdeckels am Motorgehäuse vorzusehen. Dementsprechend gibt es zwei kreissegmentförmige, ballig erhöhte Kontaktbereiche, die sich zwischen den Schrauben erstrecken.

Das Motorgehäuse ist vorteilhafterweise als ein zylindrisches Polrohr ausgebildet, welches Teil des Stators ist. Der Lagerdeckel liegt an einer Stirnseite auf dem Polrohr auf und dichtet dieses nach außen ab. Im Falle von zwei Schrauben liegen diese um 180° zueinander versetzt am Elektromotor und erstrecken sich bevorzugt an der Polrohraußenseite. Hierbei kommt sowohl eine unmittelbare Verschraubung mit dem Polrohr in Betracht, beispielsweise mit außen am Polrohr angegossenen Augen zur Aufnahme der Schrauben, als auch eine Ausführung, bei der das Polrohr an einem weiteren Gehäusebauteil angeordnet ist und die Verschraubung des Lagerdeckels mit dem weiteren Gehäusebauteil erfolgt, wodurch eine axiale Kraft erzeugt wird, mit der das Polrohr gegen das weitere Gehäusebauteil gedrückt wird.

Bei dem weiteren Gehäusebauteil handelt es sich beispielsweise um ein Gehäuse- oder Lagerschild einer Startvorrichtung zum Starten einer Brennkraftmaschine. Der Elektromotor wird in dieser Ausführung als elektrischer Startermotor eingesetzt, um ein Starterritzel drehend anzutreiben, sobald dieses aus einer Außerfunktionsposition in eine Eingriffsposition mit einem Zahnkranz der Brennkraftmaschine verstellt wird. Die Verstellbewegung des Starterritzels erfolgt hierbei zweckmäßigerweise über ein elektromagnetisches Starterrelais. Der elektrische Startermotor ist vorzugsweise koaxial zum Starterritzel angeordnet, die Antriebsbewegung der Ankerwelle des Startermotors wird bevorzugt über ein Getriebe, beispielsweise ein Plantetengetriebe, auf eine Antriebswelle übertragen, welche das Starterritzel antreibt.

Gemäß einer weiteren zweckmäßigen Ausführung deckt der Lagerdeckel eine Kommutierungseinrichtung des Elektromotors axial ab, die einen Kommutator bzw. Kollektor am Anker umfasst, an dessen Mantelfläche Kohlebürsten zur Stromübertragung anliegen. In Umfangsrichtung separierte Lamellen des Kollektors sind elektrisch mit Ankerwicklungen verbunden, die Teil eines Ankerpakets auf dem Anker sind.

An der Innenseite des Polrohrs des Elektromotors können Permanentmagnete befestigt sein, wobei auch eine Ausführung mit bestrombaren Erregerwicklungen an der Polrohrinnenseite möglich ist.

Die axiale Erhöhung in den ballig ausgeführten Abschnitten des Kontaktbereiches ist vorteilhafterweise mit einem kontinuierlichen Anstieg bis zur maximalen Erhöhung ausgeführt. Die ballige Erhöhung erfolgt beispielsweise zumindest annähernd einem sinusförmigen Verlauf, wobei der axial tiefste Punkt benachbart zu den Befestigungsstellen der Schrauben liegt und die axial größte Erhöhung in der Mitte zwischen den Schrauben.

Der Lagerdeckel kann im aufgesetzten Zustand das Polrohr bzw. Motorgehäuse axial teilweise übergreifen. Hierzu weist der Lagerdeckel eine umlaufende, sich in Achsrichtung erstreckende, topfartige Wandung auf, welche an der Innenseite die ballige Erhöhung radial begrenzt. Im montierten Zustand liegt die ballige Erhöhung auf Kontakt mit der Stirnseite des Polrohres, wobei die axiale Wand des Lagerdeckels an der Polrohraußenseite liegt.

Weitere Vorteile und zweckmäßige Ausführungen sind den weiteren Ansprüchen, der Figurenbeschreibung und den Zeichnungen zu entnehmen. Es zeigen:
- Fig. 1: eine Startervorrichtung für eine Brennkraftmaschine im Längsschnitt, mit einem elektrischen Startermotor zum Antreiben eines Starterritzels,
- Fig. 2: einen Lagerdeckel des Startermotors, der auf die axiale Stirnseite des Motorgehäuses aufsetzbar ist und eine Kommutierungseinrichtung abdeckt,
- Fig. 3: ein sinusförmiger Verlauf einer balligen Erhöhung der Kontaktfläche am Lagerdeckel, mit der der Lagerdeckel an der Stirnseite des Motorgehäuses anliegt, aufgetragen über dem Umfangswinkel.

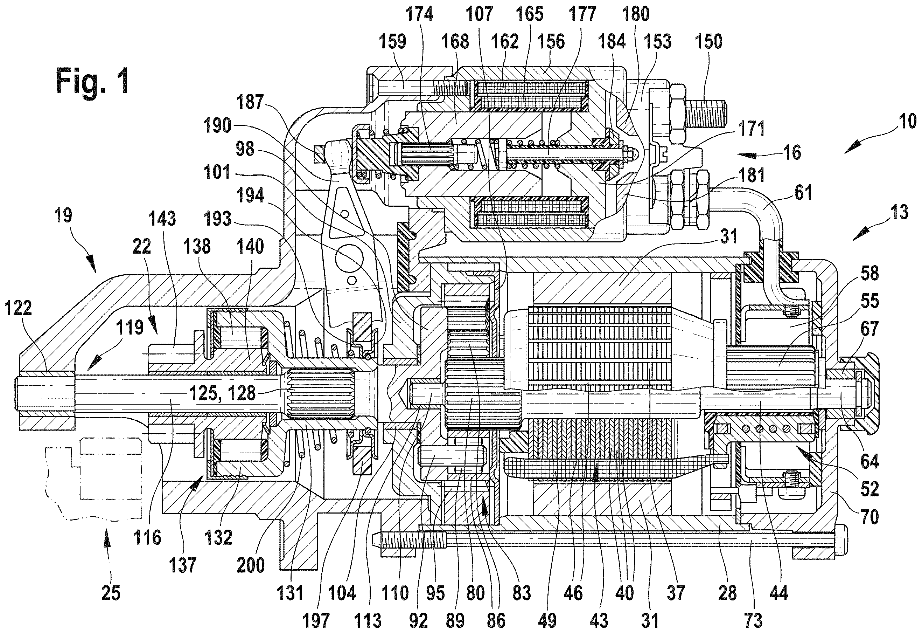

In der Fig. 1 ist eine Startvorrichtung 10 dargestellt, der zum Starten einer Brennkraftmaschine einsetzbar ist. Die Startvorrichtung 10 weist einen Startermotor 13 und ein Einrückrelais 16 auf. Der Startermotor 13 und das Einrückrelais 16 sind an einem gemeinsamen, ein Antriebslagerschild 19 bildenden Gehäuse befestigt. Der Startermotor 13 dient funktionell dazu, ein Andreh- bzw. Starterritzel 22 anzutreiben, wenn es im Zahnkranz 25 der hier nicht dargestellten Brennkraftmaschine eingespurt ist.

Der Startermotor 13 weist als Motorgehäuse ein Polrohr 28 auf, das an seinem Innenumfang Permanentmagnete 31 trägt. Die Permanentmagnete 31 umgeben einen Anker 37, der ein aus Lamellen 40 aufgebautes Ankerpaket 43 und eine in Nuten 46 angeordnete Ankerwicklung 49 aufweist. Das Ankerpaket 43 ist auf eine Antriebswelle 44 aufgepresst. An dem Andrehritzel 22 abgewandten Ende der Antriebswelle 44 ist des weiteren ein Kollektor bzw. Kommutator 52 angebracht, der Teil einer Kommutierungseinrichtung zur Stromübertragung und -wendung ist und der unter anderem aus einzelnen Kommutatorlamellen 55 aufgebaut ist. Die Kommutatorlamellen 55 sind in bekannter Weise mit der Ankerwicklung 49 derartig elektrisch verbunden, dass sich bei Bestromung der Kommutatorlamellen 55 durch Kohlebürsten 58 eine Drehbewegung des Ankers 37 im Polrohr 28 ergibt. Eine zwischen dem Einspurrelais 16 und dem Startermotor 13 angeordnete Stromzuführung 61 versorgt im Einschaltzustand die Kohlebürsten 58 mit Strom. Die Antriebswelle 44 ist kommutatorseitig mit einem Wellenzapfen 64 in einem Gleitlager 67 abgestützt, welches wiederum in einem Kommutator-Lagerdeckel 70 ortsfest gehalten ist. Der Lagerdeckel 70 wiederum wird mittels Zuganker 73, die über den Umfang des Polrohrs 28 verteilt angeordnet sind (Schrauben, beispielsweise 2, 3 oder 4 Stück) im Antriebslagerschild 19 befestigt. Es stützt sich dabei das Polrohr 28 am Antriebslagerschild 19 ab, und der Lagerdeckel 70 am Polrohr 28.

In Antriebsrichtung schließt sich an den Anker 37 ein sogenanntes Sonnenrad 80 an, das Teil eines Planetengetriebes 83 ist. Das Sonnenrad 80 ist von mehreren Planetenrädern 86 umgeben, üblicherweise drei Planetenräder 86, die mittels Wälzlager 89 auf Achszapfen 92 abgestützt sind. Die Planetenräder 86 wälzen in einem Hohlrad 95 ab, das im Polrohr 28 außenseitig gelagert ist. In Richtung zur Abtriebsseite schließt sich an die Planetenräder 86 ein Planetenträger 98 an, in dem die Achszapfen 92 aufgenommen sind. Der Planetenträger 98 wird wiederum in einem Zwischenlager 101 und einem darin angeordneten Gleitlager 104 gelagert. Das Zwischenlager 101 ist derartig topfförmig gestaltet, dass in diesem sowohl der Planetenträger 98, als auch die Planetenräder 86 aufgenommen sind. Des Weiteren ist im topfförmigen Zwischenlager 101 das Hohlrad 95 angeordnet, das letztlich durch einen Deckel 107 gegenüber dem Anker 37 geschlossen ist. Auch das Zwischenlager 101 stützt sich mit seinem Außenumfang an der Innenseite des Polrohrs 28 ab. Der Anker 37 weist auf dem vom Kommutator 52 abgewandten Ende der Antriebswelle 44 einen weiteren Wellenzapfen 110 auf, der ebenfalls in einem Gleitlager 113 aufgenommen ist, ab. Das Gleitlager 113 wiederum ist in einer zentralen Bohrung des Planetenträgers 98 aufgenommen. Der Planetenträger 98 ist einstückig mit der Abtriebswelle 116 verbunden. Diese Abtriebswelle 116 ist mit ihrem vom Zwischenlager 101 abgewandten Ende 119 in einem weiteren Lager 122, welches im Antriebslagerschild 19 befestigt ist, abgestützt. Die Abtriebswelle 116 ist in verschiedene Abschnitte aufgeteilt: So folgt dem Abschnitt, der im Gleitlager 104 des Zwischenlagers 101 angeordnet ist, ein Abschnitt mit einer sogenannten Geradverzahnung 125 (Innenverzahnung), die Teil einer sogenannten WellenNabe-Verbindung ist. Diese Welle-Nabe-Verbindung 128 ermöglicht in diesem Fall das axial geradlinige Gleiten eines Mitnehmers 131. Dieser Mitnehmer 131 ist ein hülsenartiger Fortsatz, der einstückig mit einem topfförmigen Außenring 132 des Freilaufs 137 ist. Dieser Freilauf 137 (Richtgesperre) besteht des Weiteren aus dem Innenring 140, der radial innerhalb des Außenrings 132 angeordnet ist. Zwischen dem Innenring 140 und dem Außenring 132 sind Klemmkörper 138 angeordnet. Diese Klemmkörper 138 verhindern in Zusammenwirkung mit dem Innen- und dem Außenring eine Relativdrehung zwischen dem Außenring und dem Innenring in einer zweiten Richtung. Mit anderen Worten: Der Freilauf 137 ermöglicht eine Relativbewegung zwischen Innenring 140 und Außenring 132 nur in eine Richtung. In diesem Ausführungsbeispiel ist der Innenring 140 einstückig mit dem Andrehritzel 22 und dessen Schrägverzahnung 143 (Außenschrägverzahnung) ausgeführt. Das Andrehritzel 22 kann alternativ auch als geradverzahntes Ritzel ausgeführt sein. Statt Permanentmagnete 31 können auch bestrombare Erregerwicklungen verwendet werden.

Nachfolgend wird auf den Einspurmechanismus eingegangen. Das Eindrückrelais 16 weist einen Bolzen 150 auf, der ein elektrischer Kontakt ist und der an den Pluspol einer elektrischen Starterbatterie, die hier nicht dargestellt ist, angeschlossen ist. Dieser Bolzen 150 ist durch einen Relaisdeckel 153 hindurchgeführt. Dieser Relaisdeckel 153 schließt ein Relaisgehäuse 156 ab, das mittels mehrerer Befestigungselemente 159 (Schrauben) am Antriebslagerschild 19 befestigt ist. Im Einrückrelais 16 ist weiterhin eine Einzugswicklung 162 und eine sogenannte Haltewicklung 165 angeordnet. Die Einzugswicklung 162 und die Haltewicklung 165 bewirken beide jeweils im eingeschalteten Zustand ein elektromagnetisches Feld, welches sowohl das Relaisgehäuse 156 (aus elektromagnetisch leitfähigem Material), einen linear beweglichen Anker 168 und einen Ankerrückschluss 171 durchströmt. Der Anker 168 trägt eine Schubstange 174, die beim linearen Einzug des Ankers 168 in Richtung zu einem Schaltbolzen 177 bewegt wird. Mit dieser Bewegung der Schubstange 174 zum Schaltbolzen 177 wird dieser aus seiner Ruhelage in Richtung zu zwei Kontakten 180 und 181 bewegt, so dass eine am zu den Kontakten 180 und 181 Ende des Schaltbolzens 177 angebrachte Kontaktbrücke 184 beide Kontakte 180 und 181 elektrisch miteinander verbindet. Dadurch wird vom Bolzen 150 elektrische Leistung über die Kontaktbrücke 184 hinweg zur Stromzuführung 61 und damit zu den Kohlebürsten 58 geführt. Der Startermotor 13 wird dabei bestromt.

Das Einrückrelais 16 bzw. der Anker 168 hat darüber hinaus die Aufgabe, mit einem Zugelement 187 einen dem Antriebslagerschild 19 drehbeweglich angeordneten Hebel zu bewegen. Dieser Hebel 190, üblicherweise als Gabelhebel ausgeführt, umgreift mit zwei hier nicht dargestellten Zinken an ihrem Außenumfang zwei Scheiben 193 und 194, um einen zwischen diesen eingeklemmten Mitnehmerring 197 zum Freilauf 137 hin gegen den Widerstand der Feder 200 zu bewegen und dadurch das Andrehritzel 22 in den Zahnkranz 25 einzuspuren.

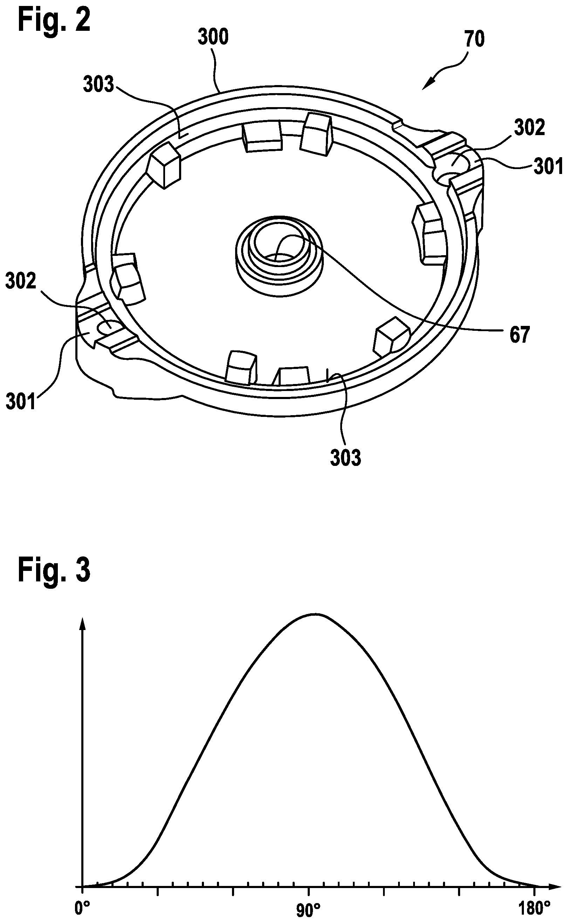

Fig. 2 zeigt eine perspektivische Innenansicht des Lagerdeckels 70, der auf die axiale Stirnseite des Polrohrs aufgesetzt wird. Zentrisch im Boden des Lagerdeckels 70 befindet sich das Gleitlager 67 zur drehbaren Aufnahme der Ankerwelle. Der Lagerdeckel 70 weist eine umlaufende, sich gegenüber dem Boden axial geringfügig erhebende Wand 300 auf, die im montierten Zustand ggf. die Stirnseite des Polrohrs übergreifen kann. Die Wand 300 erweitert sich an zwei diametral gegenüberliegenden Positionen jeweils zu einem Lagerauge 301 mit einer darin eingebrachten Durchtrittsöffnung 302 zum Hindurchführen der Zuganker bzw. Schrauben, über die der Lagerdeckel 70 mit dem Gehäuse der Startvorrichtung verbunden wird, wodurch eine axiale Anpresskraft auf die Stirnseite des Polrohrs des Startermotors ausgeübt wird.

Die umlaufende Wand 300 begrenzt radial nach außen eine Kontaktfläche 303, die als Kreisbogen ausgeführt ist und Teil des Kontaktbereichs zum Polrohr ist; die Kontaktfläche 303 liegt im montierten Zustand unmittelbar an der Stirnseite des Polrohrs an. Am Lagerdeckel 70 sind zwei gegenüberliegende Kontaktflächen 303 gebildet, die sich jeweils entlang eines Kreisbogens von ca. 180° zwischen den Durchtrittsöffnungen 302 in den Lageraugen 301 erstrecken.

Jede Kontaktfläche 303 ist bezogen auf die Längsachse des Startermotors axial ballig ausgeführt, so wie dies in Fig. 3 in starker Überhöhung dargestellt ist. In Fig. 3 ist die Überhöhung als Funktion des Umfangswinkels aufgetragen, die Überhöhung nimmt annähernd einen sinusförmigen Verlauf ein und weist in einem 90°-Winkel zu den Lageraugen 301 bzw. den Durchtrittsöffnungen 302 ein Maximum auf, wohingegen an jeweiligen Endbereichen - bei 0° und 180° - die axiale Erhöhung bis auf null zurückgeht. Die maximale, axiale Erhöhung und damit die größte Balligkeit befindet sich somit in der Mitte der kreisbogenförmigen Kontaktfläche 303 zwischen den Durchtrittsöffnungen 302 für die Befestigung des Lagerdeckels 70 mittels der Schrauben.

Die ballige Erhöhung der Kontaktfläche 303 kompensiert eine Verformung des Lagerdeckels 70 beim Befestigen mithilfe der Schrauben. Die hierbei auftretenden Befestigungskräfte ziehen die Lageraugen 301 des Lagerdeckels 70 unmittelbar an die Stirnseite des Polrohres, zugleich können die kreisbogenförmigen Kontaktflächen 303 sich geringfügig axial in Gegenrichtung abheben. Diese Verformung wird über die axial ballige Erhöhung der Kontaktflächen 303 gemäß Fig. 3 kompensiert, so dass trotzt der Verformung des Lagerdeckels 70 über den gesamten Umfang ein Kontakt zu der Stirnseite des Polrohrs und damit ein dichter Abschluss zwischen Lagerdeckel und Polrohr gegeben ist.

Der Lagerdeckel besteht vorzugsweise aus Metall, beispielsweise aus Aluminium, und kann als Druckgussbauteil ausgeführt sein.

## Patentansprüche

1. Elektromotor, insbesondere Startermotor für eine Startvorrichtung, mit einem Motorgehäuse (28), an dessen Stirnseite ein Lagerdeckel (70) über Schrauben (73) befestigt ist, **dadurch gekennzeichnet, dass** der Kontaktbereich (303) zwischen dem Lagerdeckel (70) und der Stirnseite des Motorgehäuses (28) im Abschnitt zwischen den Schrauben (73) eine ballige axiale Erhöhung aufweist, wobei die axial erhöhte Ausführung des Kontaktbereichs (303) eine Verformung des Lagerdeckels (70) beim Anschrauben kompensiert.

2. Elektromotor nach Anspruch 1, **dadurch gekennzeichnet, dass** die ballige axiale Erhöhung an der Kontaktfläche (303) des Lagerdeckels (70) zwischen Schrauben-Durchtrittsöffnungen (302) ausgebildet ist.

3. Elektromotor nach Anspruch 2, **dadurch gekennzeichnet, dass** die axiale Stirnfläche des Motorgehäuses (28) in einer orthogonal zur Längsachse gerichteten Ebene liegt.

4. Elektromotor nach einem der Ansprüche 1 bis 3, **dadurch gekennzeichnet, dass** zwei diametral gegenüberliegende Schrauben (73) und zwei gegenüberliegende kreisbogenförmige, ballig erhöhte Kontaktbereiche (303) zwischen den Schrauben (73) vorgesehen sind.

5. Elektromotor nach einem der Ansprüche 1 bis 4, **dadurch gekennzeichnet, dass** der Kontaktbereich (303) in der Mitte zwischen den Schrauben (73) die größte ballige axiale Erhöhung aufweist.

6. Elektromotor nach einem der Ansprüche 1 bis 5, **dadurch gekennzeichnet, dass** die axiale Erhöhung zumindest annähernd sinusförmig ausgebildet ist.

7. Elektromotor nach einem der Ansprüche 1 bis 6, **dadurch gekennzeichnet, dass** der Lagerdeckel (70) eine Kommutierungseinrichtung (52) des Elektromotors (13) axial abdeckt.

8. Elektromotor nach einem der Ansprüche 1 bis 7, **dadurch gekennzeichnet, dass** der Lagerdeckel (70) die Stirnseite des Motorgehäuses (28) übergreift.

9. Startvorrichtung für eine Brennkraftmaschine, mit einem Elektromotor nach einem der Ansprüche 1 bis 8 als Startermotor (13).

10. Startvorrichtung nach Anspruch 9, **dadurch gekennzeichnet, dass** die Schrauben (73) den Lagerdeckel (70) mit einem Gehäusebauteil (19) der Startvorrichtung (10) verbinden.

## Claims

1. An electric motor, in particular a starter motor for a starting device, with a motor housing (28), on the front side of which a bearing cover (70) is attached using screws (73), **characterized in that** the contact region (303) between the bearing cover (70) and the end face of the motor housing (28) has a spherical axial elevation in the section between the screws (73), wherein the axially elevated version of the contact region (303) compensates for a deformation of the bearing cover (70) when screwing.

2. An electric motor according to claim 1, **characterised in that** the spherical axial elevation is formed at the contact surface (303) of the bearing cover (70) between screw passage openings (302).

3. An electric motor according to claim 2, **characterised in that** the axial end face of the motor housing (28) lies in a plane oriented orthogonally to the longitudinal axis.

4. An electric motor according to any one of claims 1 to 3, **characterised in that** two diametrically opposed screws (73) and two opposite arcuate, spherically elevated contact regions (303) are provided between the screws (73).

5. An electric motor according to any one of claims 1 to 4, **characterised in that** the contact region (303) has the largest spherical axial elevation in the middle between the screws (73).

6. An electric motor according to any one of claims 1 to 5, **characterised in that** the axial elevation has at least an approximately sinusoidal shape.

7. An electric motor according to any one of claims 1 to 6, **characterised in that** the bearing cover (70) axially covers a commutation device (52) of the electric motor (13).

8. An electric motor according to any one of claims 1 to 7, **characterised in that** the bearing cover (70) engages over the end face of the motor housing (28).

9. A starting device for an internal combustion engine, with an electric motor according to any one of claims 1 to 8 as a starter motor (13).

10. A starting device according to claim 9, **characterised in that** the screws (73) connect the bearing cover (70) with a housing component (19) of the starting device (10).

## Revendications

1. Moteur électrique, en particulier un moteur de démarreur pour un dispositif de démarrage, comportant un carter de moteur (28) sur la face frontale duquel est fixé un chapeau de palier (70) par l'intermédiaire de vis (73), **caractérisé en ce que** la zone de contact (303) entre le chapeau de palier (70) et la face frontale du carter de moteur (28) comporte en coupe une élévation axiale bombée entre les vis (73), dans lequel la construction axialement surélevée de la zone de contact (303) compense une déformation du chapeau de palier (70) lors du vissage.

2. Moteur électrique selon la revendication 1, **caractérisé en ce que** l'élévation axiale bombée est formée sur la surface de contact (303) du couvercle de palier (70) entre des ouvertures traversantes pour vis (302).

3. Moteur électrique selon la revendication 2, **caractérisé en ce que** la face frontale axiale du carter de moteur (28) se situe dans un plan orthogonal à l'axe longitudinal.

4. Moteur électrique selon l'une des revendications 1 à 3, **caractérisé en ce que** deux vis diamétralement opposées (73) et deux zones de contact surélevées bombées opposées, en forme d'arc de cercle (303) sont prévues entre les vis (73).

5. Moteur électrique selon l'une des revendications 1 à 4, **caractérisé en ce que** la zone de contact (303) comporte au centre la plus grande élévation axiale bombée entre les vis (73).

6. Moteur électrique selon l'une des revendications 1 à 5, **caractérisé en ce que** l'élévation axiale est formée au moins de manière sensiblement sinusoïdale.

7. Moteur électrique selon l'une des revendications 1 à 6, **caractérisé en ce que** le chapeau de palier (70) recouvre axialement un dispositif de commutation (52) du moteur électrique (13).

8. Moteur électrique selon l'une des revendications 1 à 7, **caractérisé en ce que** le chapeau de palier (70) vient en prise avec la face frontale du carter de moteur (28).

9. Dispositif de démarrage pour un moteur à combustion interne, comportant un moteur électrique selon l'une des revendications 1 à 8 comme moteur de démarrage (13).

10. Dispositif de démarrage selon la revendication 9, **caractérisé en ce que** les vis (73) relient le chapeau de palier (70) à un composant de carter (19) du dispositif de démarrage (10).
